# FASCICULE DE BREVET EUROPEEN

(11) **EP 1 556 592 B1**
(45) Date de publication et mention de la délivrance du brevet: **03.01.2007**
(21) Numéro de dépôt: 03778402.2
(22) Date de dépôt: 17.10.2003
(51) Int. Cl.: F02B 19/12

(54) **DISPOSITIF D'ALLUMAGE A PRECHAMBRE POUR UN MOTEUR A COMBUSTION INTERNE, ALLUMEUR A PRECHAMBRE ET PROCEDE D'ALLUMAGE**
METHODE UND VORKAMMERZÜNDEINRICHTUNG FÜR EINE BRENNKRAFTMASCHINE
PRECOMBUSTION CHAMBER IGNITION DEVICE FOR AN INTERNAL COMBUSTION ENGINE, PRECOMBUSTION CHAMBER IGNITER AND IGNITION METHOD

(30) Priorité: 18.10.2002 FR 0213021
(43) Date de publication de la demande: 27.07.2005
(73) Titulaire: Peugeot Citroen Automobiles SA, 92200 Neuilly sur Seine (FR)
(72) Inventeur: ROBINET, Cyril, 91430 Igny (FR); TOURTEAUX, Nicolas, 92500 Rueil Malmaison (FR)
(74) Mandataire: Berger, Helmut
(86) Numéro de dépôt international: PCT/FR2003/003082
(87) Numéro de publication internationale: WO 2004/036013

(56) Documents cités:
- FR-A- 2 193 417
- FR-A- 2 781 840
- FR-A- 2 810 692
- US-A- 4 926 818
- US-A- 4 987 868
- US-A- 5 105 780
- US-A- 5 947 076

## Description

La présente invention concerne d'une manière générale un dispositif d'allumage à préchambre pour un moteur à combustion interne qui fournit un compromis entre l'efficacité de combustion à faible charge et l'efficacité de combustion à forte charge, un procédé d'allumage d'un moteur à combustion interne et un allumeur à préchambre.

Le dispositif d'allumage selon l'invention comprend un allumeur à préchambre qui peut se visser en lieu et place d'une bougie d'allumage classique sans modification de la culasse du moteur à combustion interne (diamètre ≤ 14 mm) et qui diffère de la bougie classique, entre autres, en ce que les moyens d'inflammation d'un mélange comburant et carburant sont contenus dans une préchambre définie par un corps dont la tête est pourvue de passages.

Ainsi, lorsque l'allumeur à préchambre est monté dans la culasse du moteur, la préchambre de l'allumeur est séparée de la chambre de combustion principale du moteur par la tête du corps de préchambre et communique avec la chambre de combustion principale par l'intermédiaire des passages ménagés dans cette tête.

L'allumeur à préchambre peut éventuellement être muni de moyens permettant d'introduire ou de former directement un mélange combustible dans la préchambre.

Dans le document US 4,926,818, il est décrit un procédé et un dispositif de génération de jets pulsés destiné à former des poches de combustion tourbillonnaire. Le dispositif décrit comprend une chambre principale contenant un mélange combustible principal et dans laquelle se déplace un piston et une préchambre recevant des réactifs et communiquant avec la chambre principale par des orifices pratiqués dans une paroi. L'allumage des réactifs dans la préchambre produit des jets de gaz en combustion, qui enflamment le mélange principal contenu dans la charge principale contenue dans la chambre principale par convection du front de flamme.

La demande de brevet FR 2.781.840 concerne un dispositif d'allumage d'un moteur à combustion interne, comprenant :
- une chambre principale destinée à contenir un mélange combustible principal et munie d'un système de compression de ce mélange ;
- une préchambre destinée à recevoir des réactifs, cette préchambre communiquant avec la chambre principale par au moins un passage, et
- un système d'allumage des réactifs contenus dans la préchambre.

Les passages entre la préchambre et la chambre principale empêchent le passage d'un front de flamme tout en permettant le passage de composés instables provenant de la combustion des réactifs contenus dans la préchambre. Le système de compression de la chambre principale et l'ensemencement du mélange principal en les composés instables permettent une auto-inflammation en masse du mélange principal.

Ainsi, contrairement au moteur à allumage commandé conventionnel ou au moteur décrit dans le brevet US 4,926,818, l'allumage du mélange principal n'est pas obtenu par la propagation d'un front de flamme, mais par l'ensemencement et la compression du mélange principal du moteur.

L'auto-inflammation dans un large volume permet une montée en pression très rapide, faible cliquetis et une bonne répétabilité.

La demande de brevet FR 2.810.692 concerne également un dispositif d'allumage d'un moteur à combustion interne comportant une préchambre de forme générale cyclindrique, analogue à celle décrite dans la demande FR 2.781.840, mais dont les passages communiquant avec la chambre de combustion principale sont circonscrits par une courbe circulaire passant par les centres des passages les plus externes, le diamètre de cette courbe circulaire étant dans un rapport inférieur ou égal à 1/2, de préférence inférieur ou égal à 1/3, avec le diamètre intérieur de la préchambre cylindrique. Cette disposition permet le fonctionnement du moteur avec une faible quantité d'air comburant, en particulier lorsque la composition du mélange air-carburant dans la chambre principale est stoechiométrique, pour des raisons de dépollution avec un catalyseur trois voies.

Si l'emploi d'allumeurs à préchambre empêchant la propagation d'un front de flamme dans la chambre de combustion principale s'avère efficace pour inhiber le phénomène de cliquetis pour un fonctionnement à forte charge du moteur, on observe des instabilités de combustion du moteur pour un fonctionnement à faible charge, notamment lors du fonctionnement au ralenti du moteur.

Dans la présente invention, on entend par fonctionnement à faible charge du moteur la plage de fonctionnement du moteur allant du ralenti jusqu'au quart de la pleine charge du moteur, de préférence la plage allant du ralenti à 10% de la pleine charge dans le cas d'un moteur atmosphérique et la plage allant du ralenti à 5% de la pleine charge dans le cas d'un moteur fortement suralimenté.

La présente invention a donc pour objet de fournir un dispositif d'allumage à préchambre pour moteur à combustion interne remédiant aux inconvénients ci-dessus, en particulier assurant le meilleur compromis de fonctionnement du moteur à faible et forte charges.

L'invention a encore pour objet un procédé d'allumage d'un moteur à combustion interne dans lequel l'inflammation du mélange principal comburant-carburant dans une chambre de combustion principale du moteur est obtenue par la propagation d'un front de flamme lorsque le moteur fonctionne à faible charge et par ensemencement du mélange principal en composés instables et auto-inflammation en masse du mélange principal lorsque le moteur fonctionne à forte charge.

Les buts ci-dessus sont atteints selon l'invention par un dispositif d'allumage pour moteur à combustion interne comprenant :
- une chambre principale destinée à contenir un mélange combustible principal et munie d'un système de compression dudit mélange ; et
- un allumeur comprenant une préchambre destinée à contenir un mélange combustible et un système d'allumage du mélange combustible contenu dans la préchambre, la préchambre étant définie par un corps de préchambre ayant une tête comportant des passages, la tête du corps de préchambre séparant la préchambre de la chambre principale et faisant communiquer la préchambre et la chambre principale par l'intermédiaire des passages, caractérisé en ce que les passages comprennent au moins un passage permettant la propagation d'un front de flamme de la préchambre à la chambre principale lorsque le moteur fonctionne à faible charge et au moins un passage ne permettant pas la propagation d'un front de flamme de la préchambre à la chambre principale tout en permettant le passage de la préchambre à la chambre principale de composés instables issus de la combustion du mélange combustible dans la préchambre.

En général, le nombre de passages permettant la propagation d'un front de flamme ménagés dans la tête du corps de préchambre varie de 1 à 5 et de préférence est de 1, cependant que le nombre de passages ne permettant pas la propagation d'un front de flamme varie de 1 à 20, de préférence de 3 à 15.

De préférence, le nombre de conduits de diamètre inférieur à 1 mm est supérieur au nombre de conduits de diamètre supérieur à 1 mm.

De préférence, les passages sont des passages cylindriques.

De préférence, les passages permettant la propagation d'un front de flamme ont un diamètre supérieur à 1 mm et jusqu'à 3 mm, mieux jusqu'à 1,5 mm et les passages ne permettant pas la propagation d'un front de flamme ont un diamètre de 1 mm ou moins, mieux de 0,5 à 1 mm.

Bien évidemment, le nombre et la dimension des passages permettant la propagation d'un front de flamme par rapport au nombre de passages ne permettant pas la propagation du front de flamme doivent être tels qu'en fonctionnement du moteur à forte charge, on maintienne un différentiel de pression entre la préchambre de l'allumeur et la chambre de combustion principale qui empêche la propagation d'un front de flamme de la préchambre vers la chambre principale.

Les passages peuvent être disposés comme décrits dans la demande de brevet FR 2.810.692.

Le corps de préchambre peut être réalisé en tout matériau approprié, tel que Acier 35 CD4, Inconel, Laiton etc.

Dans une réalisation particulière, le corps de préchambre est réalisé en un alliage métallique ayant une conductivité thermique à 20°C supérieure à 10W/K/m, de préférence supérieure à 30 W/K/m, et pouvant atteindre 350 W/K/m, en particulier un alliage de cuivre. Un alliage de conductivité thermique élevé approprié est l'alliage CuCr1Zr dont la conductivité thermique à 20°C est de 320 W/K/m. Ces alliages de conductivité thermique élevée conviennent tout particulièrement pour les allumeurs à préchambre destinés à être utilisés avec des moteurs à combustion interne fortement suralimentés, c'est-à-dire ayant une Pression Moyenne Effective ≥ 13 bars.

Dans une autre réalisation, la paroi interne du corps de la préchambre et/ou la paroi externe de la tête du corps de préchambre, ainsi que, éventuellement, les parois des passages, sont revêtues d'un revêtement réfractaire, tels que des revêtements en Al₂O₃, ZrY (non forcément stoechiométrique) et TiB₂. L'épaisseur de ces revêtements est généralement comprise entre 0,5 et 100 µm, de préférence 1 à 50 µm.

On augmente ainsi l'efficacité de combustion dans la préchambre et améliore le fonctionnement à faible charge, en particulier dans le cas de moteurs fortement suralimentés.

L'invention concerne aussi un procédé d'allumage d'un moteur à combustion interne dans lequel :
- on introduit un mélange combustible principal dans une chambre principale et un mélange combustible dans une préchambre communiquant avec la chambre principale par au moins un passage permettant la propagation d'un front de flamme et au moins un passage ne permettant pas la propagation d'un front de flamme ;
- on brûle le mélange combustible contenu dans la préchambre ; et
   a) pour un fonctionnement à faible charge du monteur :
      - on laisse passer au moins un front de flamme de la préchambre vers la chambre principale au moyen du passage permettant la propagation d'un front de flamme et on provoque l'inflammation du mélange combustible principal au moyen du front de flamme ;
   b) pour un fonctionnement à forte charge du moteur ;
      - on laisse passer des composés instables issus de la combustion du mélange combustible de la préchambre en empêchant toute propagation d'un front de flamme, de la préchambre vers la chambre principale, au moyen des passages, et on provoque une auto-inflammation en masse du mélange combustible principal ensemencé des composés instables dans la chambre principale.

L'invention concerne encore un allumeur pour moteur à combustion interne comprenant une préchambre définie par un corps de préchambre ayant une tête munie de passages, la préchambre étant destinée à contenir un mélange combustible, et un système d'allumage du mélange combustible contenu dans la préchambre, caractérisé en ce que la tête de préchambre comprend au moins un passage ayant un diamètre supérieur à 1 mm jusqu'à 3 mm, de préférence jusqu'à 1,5 mm, et au moins un passage ayant un diamètre de 1 mm ou moins, de préférence de 0,5 à 1 mm.

Le nombre de passages de diamètre supérieur à 1 mm varie généralement de 1 à 5 et est de préférence 1, et le nombre de passage de diamètre de 1 mm ou moins est généralement de 3 à 20, de préférence 3 à 15.

La suite de la description se réfère aux figures annexées qui représentent, respectivement :
Figure 1, une vue schématique, partiellement en coupe, d'un dispositif d'allumage comportant un allumeur à préchambre selon l'invention ;
Figure 2, une vue de dessous de la tête d'un corps de préchambre d'un allumeur selon l'invention ;
Figures 3a et 3b, des vues schématiques illustrant l'inflammation du mélange combustible principal par propagation d'un front de flamme lors du fonctionnement du moteur à faible charge ; et

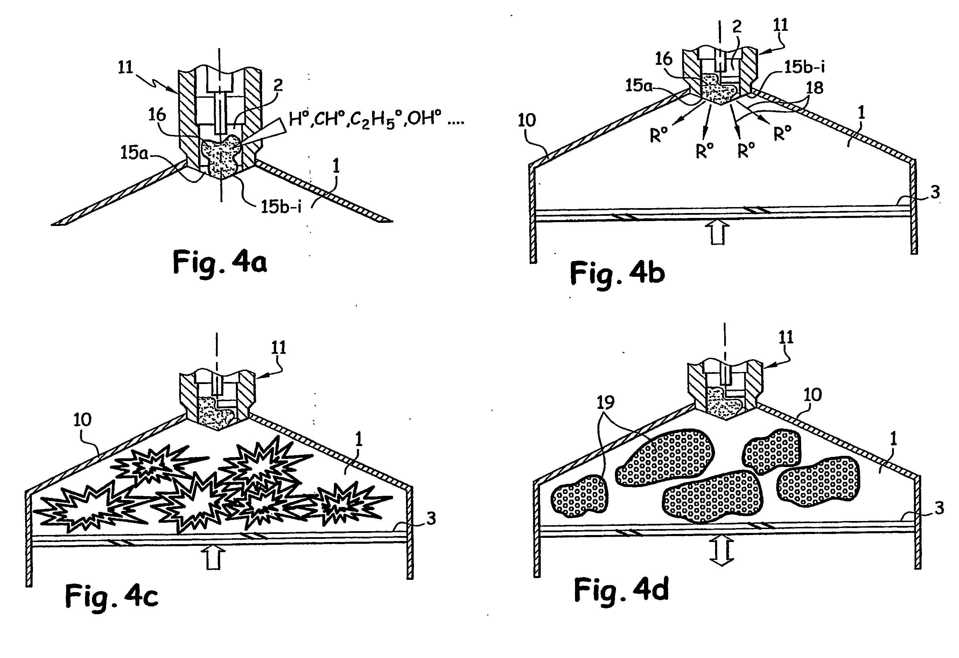

Figures 4a à 4d, des vues schématiques illustrant l'auto-inflammation du mélange combustible principal par ensemencement en composés instables lors d'un fonctionnement du moteur à forte charge.

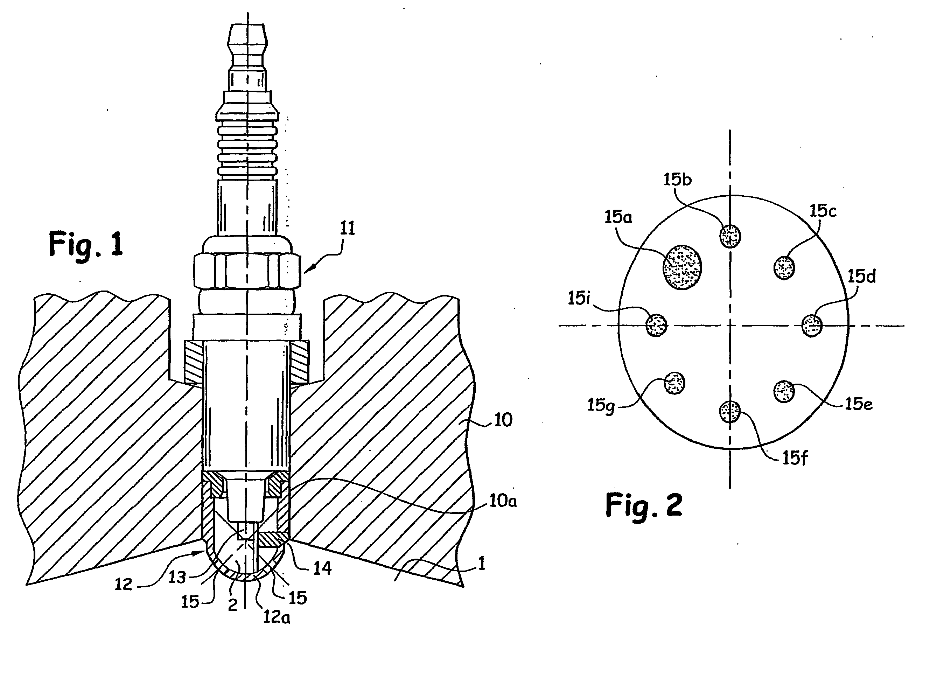

Un cylindre d'un moteur à combustion interne, représenté sur la figure 1, comporte une chambre principale 1 délimitée par une chemise (non représentée) et fermée supérieurement par une culasse 10. Comme cela est classique, la chambre principale 1 contient un piston (non représenté) actionné en translation par une bielle (non représentée).

Un allumeur à préchambre 11 selon l'invention est fixé, dans la culasse 10 de manière à être attenant à la chambre principale 1, par exemple par vissage dans un taraudage 10a de la culasse 10.

L'allumeur 11 comporte un corps de préchambre 12, de forme générale tubulaire, comprenant une tête 12a de forme générale convexe, de préférence ayant la forme d'une calotte sphérique, définissant une préchambre 2.

La tête 12a du corps de préchambre 12 constitue une paroi de séparation entre la chambre de combustion principale 1 et la préchambre 2.

Le volume de la préchambre peut être compris entre 200 et 2000 mm³ et est préférentiellement compris entre 500 et 1500 mm³.

Typiquement, la préchambre 2 a un volume inférieur à 1,5 cm³, généralement compris entre 0,5 cm³ et 1,5 cm³. En général, le rapport entre le volume de la préchambre 2 et le volume mort de la chambre principale 1 varie entre 0,1 et 5%, de préférence entre 0,1 et 2%.

Facultativement l'allumeur 11 peut en outre comporter une arrivée (non représentée) permettant d'alimenter la préchambre 2 en un mélange combustible constitué en amont ou d'introduire du carburant, l'air étant mélangé au carburant dans la préchambre 2.

La préchambre 2 est munie d'un système d'allumage comprenant une électrode centrale 13 et une électrode de masse 14.

La tête 12a constituant la paroi de séparation entre la chambre principale 1 et la préchambre 2, par exemple ayant la forme d'une calotte sphérique, est pourvue de différents passages 15, représentés de façon plus détaillée sur la figure 2.

Les passages 15, de forme générale cylindrique, comprennent un passage 15a, ayant un grand diamètre supérieur à 1 mm, généralement compris entre plus de 1 mm et 3 mm et une série de passages 15b à 15i (7 dans la réalisation de la figure 2) ayant un petit diamètre ≤ 1 mm. Généralement, la longueur des passages est inférieure à 1 mm et ils sont de préférence orientés selon des rayons de la tête hémisphérique 12a.

Bien qu'on ait représenté un seul passage 15a de diamètre supérieur à 1 mm (réalisation préférée), la tête 12a peut comporter plusieurs passages de grand diamètre, mais dans ce cas, comme on le verra ci-après, le nombre et la dimension de ces passages de grand diamètre doivent être tels qu'en général aucun front de flamme ne puisse se propager de la préchambre 2 à la chambre principale 1 lorsque le moteur fonctionne à forte charge, c'est-à-dire du quart de la charge maximale jusqu'à la charge maximale.

On comprend bien que dans le cadre de l'invention, étant donné le caractère répétitif du fonctionnement d'un moteur et que ses paramètres de fonctionnement ne peuvent être tous contrôlés avec une précision absolue, le fait qu'il faut que le dispositif empêche la propagation d'un front de flamme à forte charge est une notion statistique. En général, il l'empêchera, mais il se peut, rarement, aléatoirement ou sous certaines conditions très spécifiques, que, même à forte charge un front de flamme puisse passer. Toutefois, dans la généralité, le dispositif est configuré pour que sous un fonctionnement à forte charge, il soit préférable de ne pas avoir d'allumage par propagation d'un front de flamme, mais plutôt par des espèces instables. L'initiation multi-sites par l'ensemencement en espèces instables a été démontrée comme assurant une vitesse de combustion plus importante que la propagation d'un unique front de flammes et en ce sens présente plus de potentiel à l'inhibition du phénomène de cliquetis. Préférentiellement, il suffit d'un conduit de diamètre supérieur à 1 mm pour assurer l'allumage par propagation de fronts de flamme à faible charge. Le coincement de flamme au niveau des conduits est conditionné par le différentiel de pression préchambre - chambre de combustion. A volume identique, la dynamique de montée en pression dans la préchambre est conditionnée à l'ordre 1 par la section efficace de communication entre la préchambre et la chambre principale.

Comme on l'a indiqué, préférentiellement le nombre de conduits de diamètre inférieur à 1 mm est supérieur au nombre de conduits de diamètre supérieur à 1 mm. D'une manière générale à ratio S/V constant, l'optimisation du nombre de conduits et du diamètre (inférieur à 1 mm) est réalisé de manière à obtenir un radio conduits faible diamètre/section conduits fort diamètre le plus important possible.

Le tableau suivant présente pour trois cas de volume de préchambre (400, 750, 1500 mm³), (400 et 1500 mm³) présentant les valeurs préférentielles inférieures et supérieures), les arrangements préférentiels des conduits en terme de quantité pour les catégories de diamètre <=1 mm de diamètre >1 mm. Les différents exemples de répartitions de diamètres et nombres de conduits sont présentés à ratio S/V identique de manière à disposer d'une dynamique de combustion identique dans la préchambre pour les différents cas cités.

**Tableau : présentation des configurations préférentielles de dimensionnement des conduits à iso rapport S/V pour différents cas de volume**

| N° cas | 1 | 2 | | 3 | 4 | 5 | | 6 | 7 | 8 | 9 |
|---|---|---|---|---|---|---|---|---|---|---|---|
| Volume (mm3) | 400 | 400 | | 750 | 750 | 750 | | 1500 | 1500 | 1500 | 1500 |
| | | | | | | | | | | | |
| diamètre n°1 | 0,9 | 0,6 | | 0,9 | 0,9 | 0,8 | | 0,9 | 0,9 | 0,6 | 0,8 |
| nombre n°1 | 4 | 3 | | 8 | 3 | 7 | | 16 | 5 | 14 | 15 |
| diamètre n°2 | 0 | 1,5 | | 0 | 2 | 1,4 | | 0 | 3 | 2 | 2 |
| nombre n°2 | 0 | 1 | | 0 | 1 | 1 | | 0 | 1 | 2 | 1 |
| Nombre conduits | 4 | 4 | | 8 | 4 | 8 | | 16 | 6 | 16 | 16 |
| | | | | | | | | | | | |
| section n°1 | 2,5 | 0,8 | | 5,1 | 1,9 | 3,5 | | 10,2 | 3,2 | 4,0 | 7,5 |
| section n°2 | 0,0 | 1,8 | | 0,0 | 3,1 | 1,8 | | 0,0 | 7,1 | 6,3 | 3,1 |
| section (mm2) | 2,5 | 2,6 | | 5,1 | 5,1 | 5,3 | | 10,2 | 10,2 | 10,2 | 10,7 |
| | | | | | | | | | | | |
| rapport S/V (mm-1) (10⁻³) | 6,4 | 6,5 | | 6,8 | 6,7 | 6.7 | | 6,8 | 6,8 | 6,8 | 7,1 |
| | | | | | | | | | | | |
| Préférentiel (par ordre de préférence) | 2 | 1 | | 3 | 2 | 1 | | 3 | 2 | 2 | 1 |

| | | | | | | | | | | | |
|---|---|---|---|---|---|---|---|---|---|---|---|
| **Commentaires / différents cas :** 1. cas initial V=400 mm3 : pas de conduit inférieur à 1 mm (pas de propagation de flamme) 2. cas optimisé pour V=400 mm3 : nombre de conduits identique au cas initial, répartition section efficace conduits faible diamètre / conduits forts diamètres (30%, 70%), répartition défavorable à un ensemencement uniforme à charge élevée. 3. cas initial V=750 mm3 : pas de conduit inférieur à 1 mm (pas de propagation de flamme) 4. un conduit de diamètre 2 mm, cas défavorable en terme d'uniformité d'ensemencement en espèces instables à charge élevée car nombre de conduits largement inférieur au cas initial 5. cas optimisé pour V=750 mm3 : nombre de conduits identique au cas initial, un conduit > 1 mm, répartition section efficace conduits faible diamètre / conduits forts diamètres (66%, 34%), évolution du diamètre < 1 mm de 0.9 à 0.8 mm. | | | | | | | | | | | |

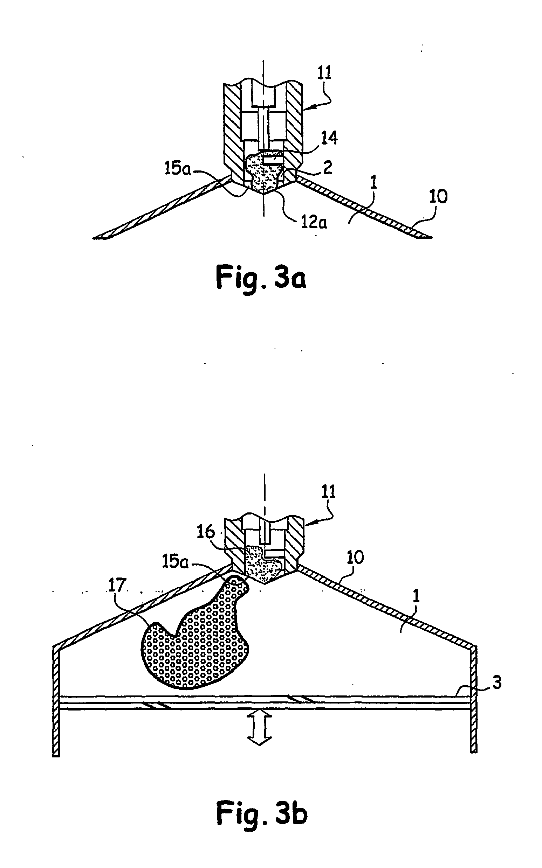

On va maintenant décrire le fonctionnement de l'allumeur et du dispositif d'allumage selon l'invention en liaison avec les figures 3a et 3b (faible charge) et 4a à 4d (forte charge).

Comme indiqué précédemment lors de l'utilisation d'un allumeur à préchambre avec uniquement des passages de petit diamètre (0.9 mm), on a constaté des instabilités de combustion pour un fonctionnement à faible charge du moteur, en particulier au ralenti. On a déterminé que ce problème était dû à des niveaux de pression et température atteints lors de la phase de compression moteur insuffisants pour permettre l'auto-inflammation dans la chambre principale ensemencée en composés instables.

L'allumeur selon l'invention remédie à cet inconvénient.

De par la faible quantité de mélange air/carburant dans la préchambre 2 dans les cas faiblement chargés, la montée en pression dans la préchambre est nettement moins violente que dans les cas fortement chargés et le front de flamme 16 obtenu par la combustion du mélange dans la préchambre 2 peut, grâce au passage de grand diamètre 15a se propager dans la chambre principale 1 et y créer une poche de combustion 17.

Cette continuité de propagation du front de flamme entre préchambre 2 et chambre principale 1 assure une stabilité à faible charge similaire au cas conventionnel des moteurs à allumage commandé.

Dans le cas de fortes charges, la quantité de mélange carburé dans la préchambre 2 est de 3 à 7 fois supérieure au cas faiblement chargé.

Lors de la combustion du mélange dans la préchambre, la montée en pression est nettement plus importante. Le différentiel de pression entre la préchambre 2 et la chambre principale 1 empêche la propagation du front de flamme 16 de la préchambre 2 à la chambre principale 1.

Néanmoins, les passages 15a à 15i laissent passer le flux 18 de composés instables de la préchambre 2 à la chambre principale 1.

Lors de la remontée du piston 3, la compression produit une auto-inflammation en masse du mélange principal, sous forme de poches de combustion 19.

## Revendications

1. Dispositif d'allumage pour moteur à combustion interne comprenant :
- une chambre principale (1) destinée à contenir un mélange combustible principal et munie d'un système de compression dudit mélange ; et
- un bougie (11) comprenant une préchambre (2) destinée à contenir un mélange combustible et un système d'allumage (13, 14) du mélange combustible contenu dans la préchambre (2), la préchambre étant définie par un corps de préchambre (12) ayant une tête (12a) comportant des passages (15a - 15i), la tête (12a) du corps de préchauffage (12) séparant la préchambre (2) de la chambre principale (1) et faisant communiquer la préchambre (2) et la chambre principale (1) par l'intermédiaire des passages (15a - 15i), **caractérisé en ce que** les passages comprennent au moins un passage (15a) permettant la propagation d'un front de flamme de la préchambre (2) à la chambre principale (1) lorsque le moteur fonctionne à faible charge et au moins un passage ne permettant pas la propagation d'un front de la préchambre (2) à la chambre principale (1) tout en permettant le passage de la préchambre (2) à la chambre principale (1) de composés instables issus de la combustion du mélange combustible dans la préchambre (2).

2. Dispositif selon la revendication 1, **caractérisé en ce que** le nombre de passages permettant la propagation d'un front de flamme ménagés dans la tête (12a) du corps de préchambre (12) est de 1 à 5, de préférence 1.

3. Dispositif selon la revendication 1 ou 2, **caractérisé en ce que** le nombre de passages ne permettant pas la propagation d'un front de flamme est de 1 à 20, de préférence 3 à 15.

4. Dispositif selon l'une quelconque des revendications précédentes, **caractérisé en ce que** le ou les passages permettant la propagation d'un front de flamme ont un diamètre supérieur à 1 mm jusqu'à 3 mm, de préférence jusqu'à 1,5 mm.

5. Dispositif selon l'une quelconque des revendications précédentes, **caractérisé en ce que** les passages ne permettant pas la propagation d'un front de flamme ont un diamètre ≤ 1 mm, de préférence de 0,5 à 1 mm

6. Dispositif selon l'une quelconque des revendications précédentes, **caractérisé en ce que** la tête (12a) du corps de préchambre (12) a la forme d'une calotte sphérique.

7. Dispositif selon la revendication 6, **caractérisé en ce que** les passages (15a - 15i) sont orientés suivant des rayons de la calotte sphérique.

8. Dispositif selon l'une quelconque des revendications précédentes, **caractérisé en ce que** le corps de préchambre (12) est un alliage métallique ayant une conductivité thermique à 20°C d'au moins 10 W/K/m, de préférence d'au moins 30 W/K/m.

9. Dispositif selon la revendication 8, **caractérisé en ce que** l'alliage est un alliage de cuivre.

10. Dispositif selon la revendication 9, **caractérisé en ce que** l'alliage est l'alliage Cu Cr 1 Zr.

11. Dispositif selon l'une quelconque des revendications 1 à 7, **caractérisé en ce que** la paroi interne du corps de préchambre (12) et/ou la paroi externe de la tête (12a) du corps de préchambre (12) et/ou les parois des passages (15a - 15i) sont revêtues d'un revêtement réfractaire.

12. Dispositif selon la revendication 11, **caractérisé en ce que** le revêtement réfractaire est choisi parmi : Al₂O₃, ZrY et TiB₂.

13. Dispositif selon la revendication 11 ou 12, **caractérisé en ce que** le revêtement réfractaire a une épaisseur de 0,5 à 100 µm, de préférence de 1 à 50 µm.

14. Procédé d'allumage d'un moteur à combustion interne dans lequel :
- on introduit un mélange combustible principal dans une chambre principale et un mélange combustible dans une préchambre communiquant avec la chambre principale par au moins un passage permettant la propagation d'un front de flamme et au moins un passage ne permettant pas la propagation d'un front de flamme ;
- on brûle le mélange combustible contenu dans la préchambre ; et
c) pour un fonctionnement à faible charge du moteur :
• on laisse passer au moins un front de flamme de la préchambre vers la chambre principale au moyen du passage permettant la propagation d'un front de flamme et on provoque l'inflammation du mélange combustible principal au moyen du front de flamme ;
d) pour un fonctionnement à forte charge du moteur ;
• on laisse passer des composés instables issus de la combustion du mélange combustible de la préchambre en empêchant toute propagation d'un front de flamme, de la préchambre vers la chambre principale, au moyen des passages, et on provoque une auto-inflammation en masse du mélange combustible principal ensemencé des composés instables dans la chambre principale.

15. Bougie pour moteur à combustion comprenant une préchambre définie par un corps de préchambre ayant une tête munie de passages, la préchambre étant destinée à contenir un mélange combustible, et un système d'allumage du mélange combustible contenu dans la préchambre, **caractérisé en ce que** la tête de préchambre comprend au moins un passage ayant un diamètre supérieur à 1 mm jusqu'à 3 mm, de préférence jusqu'à 1,5 mm, et au moins un passage ayant un diamètre de 1 mm ou moins, de préférence de 0,5 à 1 mm.

16. Bougie selon la revendication 15, **caractérisé en ce que** la tête de préchambre comprend 1 à 5 passages de diamètre supérieur à 1 mm, de préférence 1.

17. Bougie selon la revendication 15 ou 16, **caractérisé en ce que** la tête de préchambre comprend 1 à 20 passages de diamètre égal ou inférieur à 1 mm, de préférence 3 à 15.

18. Bougie selon l'une quelconque des revendications 15 à 17, **caractérisé en ce que** la tête de préchambre est une calotte sphérique.

19. Bougie selon la revendication 18, **caractérisé en ce que** les passages sont orientés suivant des rayons de la calotte sphérique.

## Claims

1. Internal combustion engine ignition device comprising:
- a main chamber (1) adapted to contain a main combustible mixture and provided with a system for compressing said mixture; and
- a sparkplug (11) comprising a prechamber (2) adapted to contain a combustible mixture and a system (13, 14) for igniting the combustible mixture contained in the prechamber (2), the prechamber being defined by a prechamber body (12) having a head (12a) including passages (15a - 15i), the head (12a) of the preheating body (12) separating the prechamber (2) from the main chamber (1) and providing communication between the prechamber (2) and the main chamber (1) via the passages (15a - 15i),
**characterised in that** the passages comprise at least one passage (15a) allowing the propagation of a flame front from the prechamber (2) to the main chamber (1) when the engine is operating at low load and at least one passage not allowing the propagation of a front from the prechamber (2) to the main chamber (1) whilst allowing the passage from the prechamber (2) to the main chamber (1) of unstable compounds resulting from the combustion of the combustible mixture in the prechamber (2).

2. Device according to claim 1, **characterised in that** the number of passages allowing the propagation of a flame front provided in the head (12a) of the prechamber body (12) is from 1 to 5, preferably 1.

3. Device according to claim 1 or claim 2, **characterised in that** the number of passages not allowing the propagation of a flame front is from 1 to 20, preferably 3 to 15.

4. Device according to any one of the preceding claims, **characterised in that** the passage or passages allowing the propagation of a flame front have a diameter greater than 1 mm up to 3 mm, preferably up to 1.5 mm.

5. Device according to any one of the preceding claims, **characterised in that** the passages not allowing the propagation of a flame front have a diameter ≤ 1 mm, preferably from 0.5 to 1 mm.

6. Device according to any one of the preceding claims, **characterised in that** the head (12a) of the prechamber body (12) has the shape of a spherical dome.

7. Device according to claim 6, **characterised in that** the passages (15a - 15i) are oriented along radii of the spherical dome.

8. Device according to any one of the preceding claims, **characterised in that** the prechamber body (12) is a metal alloy having a thermal conductivity at 20° C of at least 10 W/K/m, preferably at least 30 W/K/m.

9. Device according to claim 8, **characterised in that** the alloy is a copper alloy.

10. Device according to claim 9, **characterised in that** the alloy is the Cu Cr 1 Zr alloy.

11. Device according to any one of claims 1 to 7, **characterised in that** the internal wall of the prechamber body (12) and/or the external wall of the head (12a) of the prechamber body (12) and/or the walls of the passages (15a - 15i) are coated with a refractory coating.

12. Device according to claim 11, **characterised in that** the refractory coating is chosen from: Al₂O₃, ZrY and TiB₂.

13. Device according to claim 11 or claim 12, **characterised in that** the refractory coating has a thickness from 0.5 to 100 µm, preferably from 1 to 50 µm.

14. Internal combustion engine ignition method wherein:
- a main combustible mixture is introduced into a main chamber and a combustible mixture is introduced into a prechamber communicating with the main chamber via at least one passage allowing the propagation of a flame front and at least one passage not allowing the propagation of a flame front;
- the combustible mixture contained in the prechamber is burned; and
c) for operation of the engine at low loads:
• at least one flame front is allowed to pass from the prechamber to the main chamber by means of the passage allowing the propagation of a flame front and the main combustible mixture is caused to be ignited by means of the flame front;
d) for operation of the engine at high loads:
• unstable compounds resulting from the combustion of the combustible mixture are allowed to pass out of the prechamber whilst any propagation of a flame front from the prechamber to the main chamber by means of the passages is prevented, and mass self-ignition is brought about of the main combustible mixture seeded with the unstable compounds in the main chamber.

15. Sparkplug for internal combustion engines comprising a prechamber defined by a prechamber body having a head provided with passages, the prechamber being adapted to contain a combustible mixture, and a system for igniting the combustible mixture contained in the prechamber, **characterised in that** the prechamber head comprises at least one passage having a diameter greater than 1 mm up to 3 mm, preferably up to 1.5 mm, and at least one passage having a diameter of 1 mm or less, preferably from 0.5 to 1 mm.

16. Sparkplug according to claim 15, **characterised in that** the prechamber head comprises 1 to 5 passages with a diameter greater than 1 mm, preferably 1.

17. Sparkplug according to claim 15 or claim 16, **characterised in that** the prechamber head comprises 1 to 20 passages with a diameter equal to or less than 1 mm, preferably 3 to 15.

18. Sparkplug according to any one of claims 15 to 17, **characterised in that** the prechamber head is a spherical dome.

19. Sparkplug according to claim 18, **characterised in that** the passages are oriented along radii of the spherical dome.

## Patentansprüche

1. Zündvorrichtung für einen Verbrennungsmotor, mit:
- einer Hauptkammer (1), die dazu bestimmt ist, ein Hauptbrennstoffgemisch zu enthalten, und die mit einer Einrichtung zum Verdichten des Gemischs versehen ist, und
- einer Zündkerze (11) mit einer Vorkammer (2), die dazu bestimmt ist, ein Brennstoffgemisch zu enthalten, und mit einer Einrichtung (13, 14) zum Zünden des in der Vorkammer (2) enthaltenen Brennstoffgemischs, wobei die Vorkammer von einem Vorkammergehäuse (12) definiert wird, das einen Kopf (12a) mit Durchlässen (15a - 15i) aufweist, wobei der Kopf (12a) des Vorkammergehäuses (12) die Vorkammer (2) von der Hauptkammer (1) trennt und die Vorkammer (2) mit der Hauptkammer (1) über die Durchlässe (15a - 15i) verbindet, **dadurch gekennzeichnet, dass** die Durchlässe zumindest einen Durchlass (15a) enthalten, der die Ausbreitung einer Flammenfront von der Vorkammer (2) zur Hauptkammer (1) gestattet, wenn der Motor unter geringer Last arbeitet, sowie zumindest einen Durchlass, der nicht die Ausbreitung einer Front von der Vorkammer (2) zur Hauptkammer (1) gestattet und dabei den Durchtritt von instabilen Verbindungen von der Vorkammer (2) zur Hauptkammer (1) gestattet, die aus der Verbrennung des Brennstoffgemischs in der Vorkammer (2) stammen.

2. Vorrichtung nach Anspruch 1, **dadurch gekennzeichnet, dass** die Anzahl an Durchlässen, welche die Ausbreitung einer Flammenfront gestatten und in den Kopf (12a) des Vorkammergehäuses (12) eingebracht sind 1 bis 5, vorzugsweise 1 beträgt.

3. Vorrichtung nach Anspruch 1 oder 2, **dadurch gekennzeichnet, dass** die Anzahl an Durchlässen, die nicht die Ausbreitung einer Flammenfront gestatten, 1 bis 20, vorzugsweise 3 bis 15 beträgt.

4. Vorrichtung nach einem der vorangehenden Ansprüche, **dadurch gekennzeichnet, dass** der bzw. die Durchlässe, welche die Ausbreitung einer Flammenfront gestatten, einen Durchmesser größer als 1 mm bis 3 mm, vorzugsweise bis 1,5 mm aufweisen.

5. Vorrichtung nach einem der vorangehenden Ansprüche, **dadurch gekennzeichnet, dass** die Durchlässe, die nicht die Ausbreitung einer Flammenfront gestatten, einen Durchmesser ≤ 1 mm, vorzugsweise von 0,5 bis 1 mm aufweisen.

6. Vorrichtung nach einem der vorangehenden Ansprüche, **dadurch gekennzeichnet, dass** der Kopf (12a) des Vorkammergehäuses (12) die Form einer kugelförmigen Kalotte hat.

7. Vorrichtung nach Anspruch 6, **dadurch gekennzeichnet, dass** die Durchlässe (15a - 15i) nach den Radien der kugelförmigen Kalotte ausgerichtet sind.

8. Vorrichtung nach einem der vorangehenden Ansprüche, **dadurch gekennzeichnet, dass** das Vorkammergehäuse (12) eine Metalllegierung mit einer Wärmeleitfähigkeit bis 20°C von mindestens 10 W/K/m, vorzugsweise von mindestens 30 W/K/m ist.

9. Vorrichtung nach Anspruch 8, **dadurch gekennzeichnet, dass** die Legierung eine Kupferlegierung ist.

10. Vorrichtung nach Anspruch 9, **dadurch gekennzeichnet, dass** die Legierung die Legierung Cu Cr 1 Zr ist.

11. Vorrichtung nach einem der Ansprüche 1 bis 7, **dadurch gekennzeichnet, dass** die Innenwand des Vorkammergehäuses (12) und/oder die Außenwand des Kopfs (12a) des Vorkammergehäuses (12) und/oder die Wände der Durchlässe (15a - 15i) mit einer feuerfesten Beschichtung beschichtet sind.

12. Vorrichtung nach Anspruch 11, **dadurch gekennzeichnet, dass** die feuerfeste Beschichtung ausgewählt ist aus Al₂O₃, ZrY und TiB₂.

13. Vorrichtung nach Anspruch 11 oder 12, **dadurch gekennzeichnet, dass** die feuerfeste Beschichtung eine Dicke von 0,5 bis 100 µm, vorzugsweise von 1 bis 50 µm hat.

14. Verfahren zum Zünden eines Verbrennungsmotors, wobei
- ein Hauptbrennstoffgemisch in eine Hauptkammer und ein Brennstoffgemisch in eine Vorkammer eingebracht wird, die mit der Hauptkammer über zumindest einen Durchlass verbunden ist, der die Ausbreitung einer Flammenfront gestattet, sowie über zumindest einen Durchlass, der nicht die Ausbreitung einer Flammenfront gestattet,
- das in der Vorkammer enthaltene Brennstoffgemisch verbrannt wird, und
c) bei einem Motorbetrieb unter geringer Last
• zumindest eine Flammenfront von der Vorkammer zur Hauptkammer über den Durchlass durchgelassen wird, der die Ausbreitung einer Flammenfont gestattet, und die Entzündung des Hauptbrennstoffgemischs mittels der Flammenfront hervorgerufen wird,
d) bei einem Motorbetrieb unter hoher Last
• instabile Verbindungen, die aus der Verbrennung des Brennstoffgemischs der Vorkammer stammen, unter Verhinderung jeglicher Ausbreitung einer Flammenfront von der Vorkammer zur Hauptkammer über Durchlässe durchgelassen werden und eine Selbstentzündung des Hauptbrennstoffgemischs in Masse hervorgerufen wird, das mit den instabilen Verbindungen aus der Hauptkammer versetzt ist.

15. Zündkerze für einen Verbrennungsmotor mit einer Vorkammer, die von einem Vorkammergehäuse definiert wird, der einen Kopf mit Durchlässen aufweist, wobei die Vorkammer dazu bestimmt ist, ein Brennstoffgemisch zu enthalten, und mit einer Einrichtung zum Zünden des in der Vorkammer enthaltenen Brennstoffgemischs, **dadurch gekennzeichnet, dass** der Vorkammerkopf zumindest einen Durchlass mit einem Durchmesser größer als 1 mm bis 3 mm, vorzugsweise bis 1,5 mm und zumindest einen Durchlass mit einem Durchmesser von 1 mm oder weniger, vorzugsweise von 0,5 bis 1 mm aufweist.

16. Zündkerze nach Anspruch 15, **dadurch gekennzeichnet, dass** der Vorkammerkopf 1 bis 5 Durchlässe mit einem Durchmesser größer als 1 mm, vorzugsweise 1 Durchlass aufweist.

17. Zündkerze nach Anspruch 15 oder 16, **dadurch gekennzeichnet, dass** der Vorkammerkopf 1 bis 20 Durchlässe mit einem Durchmesser gleich oder kleiner als 1 mm, vorzugsweise 3 bis 15 Durchlässe aufweist.

18. Zündkerze nach einem der Ansprüche 15 bis 17, **dadurch gekennzeichnet, dass** der Vorkammerkopf eine kugelförmige Kalotte ist.

19. Zündkerze nach Anspruch 18, **dadurch gekennzeichnet, dass** die Durchlässe nach den Radien der kugelförmigen Kalotte ausgerichtet sind.
